(19) Europäisches Patentamt European Patent Office Office européen des brevets

(11) **EP 3 006 216 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(51) Int Cl.:
***B41J 2/21*** *(2006.01)*

(21) Anmeldenummer: **15182038.8**

(22) Anmeldetag: **21.08.2015**

(54) **VERFAHREN ZUR KOMPENSATION LOKALER PASSERUNGENAUIGKEITEN**

METHOD FOR COMPENSATING LOCAL REGISTRATION INACCURACIES

PROCEDE DE COMPENSATION DE DEFAUTS DE REPERAGE LOCAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2014 DE 102014013370**

(43) Veröffentlichungstag der Anmeldung:
**13.04.2016 Patentblatt 2016/15**

(73) Patentinhaber: **Heidelberger Druckmaschinen AG 69115 Heidelberg (DE)**

(72) Erfinder: **Hauck, Dr. Axel 76227 Karlsruhe (DE)**

(56) Entgegenhaltungen:
**DE-A1- 10 040 368      DE-A1-102009 051 197
DE-A1-102012 020 238      US-A1- 2010 129 096
US-A1- 2011 134 178**

EP 3 006 216 B1

**Beschreibung**

Die vorliegende Erfindung betrifft ein Verfahren zur Kompensation lokaler Passerungenauigkeiten.

Die Erfindung liegt in dem technischen Gebiet des Digitaldrucks.

Beim Digitaldruck, insbesondere beim Inkjetdruck, treten ähnlich wie beim Offset sowohl bei Verwendung von Rollen- als auch Bogendruck verfahrensbedingt Verformungen der Bedruckstoffe und dadurch geometrische Deformationen der in den einzelnen Druckwerken gedruckten Farbauszüge auf. Diese führen zu lokalen Passerungenauigkeiten über die Druckwerke. Für eine gute Druckqualität sowie für die Kompensation ausgefallener Einzeldüsen ist jedoch eine örtliche Lagegenauigkeit bis hin zu wenigen μm erforderlich.

Es ist dabei zu unterscheiden zwischen geometrischen Bildkorrekturen der Einzelbildauszüge zueinander, ortsaufgelöst und dem Register, beschrieben durch die relative Lage der Einzelbilder zueinander ohne Verzerrung, in Laufrichtung, quer dazu, und durch Drehung.

Beim Inkjet UV Druck wird die Bahn unter Spannung über einen Rollentisch geführt und in nacheinander angeordneten Druckeinheiten DWs mit den Einzelfarbauszügen bedruckt. Die Bahn steht unter Spannung, diese kann in den einzelnen Druckwerken bzw. dazwischen unterschiedliche Werte (ab Druckwerk 1 aufsteigend) annehmen. Zwischen den Druckwerken wird darüber hinaus, um die Farbe etwas zu fixieren, durch UV Strahlung ein sogenanntes Pinning durchgeführt. Damit wird das Verlaufen bzw. der Trocknungszustand der Farbe gesteuert. Die direkte Strahlung führt zur Erwärmung der Bahn, außerdem entsteht durch die Vernetzung der Farbe Wärme welche zusätzlich an die Bahn weiterleitet wird. Die Bahn hat in den einzelnen Druckwerken abhängig von den Einflussgrößen damit von Werk zu Werk unterschiedliche Temperaturen und erfährt somit unterschiedliche Wärmeausdehnungen. Außerdem verändert sich in Abhängigkeit der Temperatur der E-Modul insbesondere bei Folien. Dies führt wiederum unter der Bahnspannung zu Änderungen der Bahndehnung sowohl in Längs- als auch Querrichtung der Bahn (Querkontraktion).

Zur Korrektur solcher oder ähnlicher deformationsbedingter Passer- und Registerungenauigkeiten sind aus dem Stand der Technik bereits Methoden zur Korrektur aus anderen Druckverfahren bekannt. So offenbart die Patentanmeldung DE 000010136747 A1 ein Verfahren zur Kompensation von Formabweichungen einzelner Farbauszüge bei der Belichtung von Druckformen für die Druckwerke einer bogenverarbeitenden Rotationsdruckmaschine. Die die Farbauszüge aufnehmenden einzelnen Oberflächen von Druckformen werden durch Belichtungseinheiten belichtet, die ortsfest relativ zur zu belichtenden Oberfläche oder relativ zu dieser bewegbar angeordnet sein können. Die Druckform wird während der Belichtung ein Lageabweichungen kompensierendes Temperaturprofil aufgeprägt.

In der DE 102012020238 A1 dagegen ist für den Bogenoffset beschrieben, auf welche Weise transformationsbedingte Drucklängenänderungen kompensiert werden können. Dies bezieht sich auf Druckformen/-platten. Die verallgemeinerte Erstellung von Druckvorlagen für den Inkjetdruck ist ebenfalls aufgeführt. Relevant ist hier für den UV Rollen-Inkjetdruck die Kompensation der durch Bahnspannung, d.h. Zugkräfte, und Wärmeeintrag aufgrund der UV Strahlung entstehende Bahn- bzw. Substratdeformation.

Die US-Patentanmeldung US 2011 013 4179 A1 offenbart eine Druckmaschine und ein Verfahren zum Durchführen eines Druckprozesses, in welchem ein Drucksubstrat beidseitig bedruckt wird. Dabei entstehende geometrische Verzerrungen auf beiden Seiten des Substrates, welche das Druckbild beeinflussen werden dabei rechnergesteuert berechnet. Eine Korrektur dieser Verzerrung wird danach auf Basis der berechneten Verzerrung berechnet und diese Korrektur wird dann angewendet.

Die deutsche Patentanmeldung DE 100 40 368 A1 hingegen offenbart ein Verfahren und eine Vorrichtung zur Einstellung von Einrichtungen zur Erzeugung von Teilfarbenbildern bei einer Mehrfarbendruckmaschine. Dabei werden auf der Grundlage der Faserorientierung des Drucksubstrats und entsprechenden Erfahrungswerten die dadurch verursachten geometrischen Verzerrungen ermittelt und im Druckprozess berücksichtigt.

Die deutsche Patentanmeldung DE 10 2009 051 197 A1 beschreibt ein Verfahren, eine Vorrichtung und ein Computerprogramm zur Korrektur eines durch Verformung des Drucksubstrates bedingten Registerfehlers in einem Druckprozess. Dabei werden entlang einer Bildverarbeitungsachse, welche der Verformung folgt, die Daten der Rastergrafik verarbeitet und die Anzahl der Rasterpunkte verformungsbedingt angepasst.

Die US Patentanmeldung US 2010 012 9096 A1 wiederum offenbart ein Verfahren und eine Vorrichtung zum Kompensieren von Verzerrungen, welche durch das wärmebasierte Aufbringen von Toner auf ein Drucksubstrat entstehen. Dabei wird das Substratverhalten bei einer bestimmten Temperatur ermittelt und aufgrund dieser Daten eine Kompensation für die Stauchung des Drucksubstrates berechnet.

Nachteilig ist an diesen bekannten Verfahren, dass sie zwar teilweise für den Inkjetdruck verwendet werden können, jedoch nicht für diesen entwickelt wurden. Daher sind Anpassungen erforderlich und Effizienzverluste zwangsläufig.

Ein großer und allgemeiner Nachteil dieser bekannten Verfahren ist außerdem, dass zwar die Position der Teilbilder korrigiert werden kann, jedoch nur sehr bedingt deren Länge und Breite. Zudem sind sie aufwändig, da sie genaue Messsysteme zur Erfassung der Abweichungen benötigen. Sie können auch immer nur zur Korrektur bereits aufgetretener Abweichungen verwendet werden, wenn bereits unerwünschte Makulatur aufgetreten ist.

Die Aufgabe der vorliegenden Erfindung besteht somit darin, mittels eines Verfahrens derlei lokale Passerungenauigkeiten und geometrische Abweichungen vorherzubestimmen und im Druck dann so zu kompensieren, dass eine örtliche Passgenauigkeit der Teilbilder zueinander erreicht wird.

Die erfindungsgemäße Lösung dieser Aufgabe stellt ein Verfahren mit den Merkmalen von Hauptanspruch 1 dar.

Es handelt sich dabei um ein Verfahren zur modellbasierten Kompensation lokaler Passerungenauigkeiten in einer Rollen-Inkjet-Druckmaschine, wobei geometrische Abweichungen der Farbauszüge berechnet werden, einzelnen Farbauszüge zur Kompensation der berechneten geometrischen Abweichungen modifiziert werden, um dann einen Druckauftrages mit den durchgeführten Modifikationen durchzuführen, und welches dadurch gekennzeichnet ist, dass ein mathematisches Modell zur Berechnung der geometrischen Abweichungen von Farbauszügen erstellt wird, dafür die Einflussgrößen des Modells, welche Prozess- und Materialparameter umfassen, ermittelt werden und dann die Modifikation der Farbauszüge unter Einsatz des erstellten Modells und der ermittelten Einflussgrößen durchgeführt wird.

Um sowohl den Messaufwand nach dem Druck, als auch die Makulatur im Fehlerfall möglichst gering zu halten wird ein Modell erstellt, in welchem lokale Passerungenauigkeiten, also geometrische Abweichungen welche durch Dehnungen und Deformationen des Bedruckstoffes entstehen, berechnet werden können. Die Einflussgrößen des Modells sind Prozessparameter, wie z.B. die mechanische Spannung auf den Bedruckstoff oder die Druckgeschwindigkeit und Materialparameter, wie z.B. physikalische Eigenschaften der Tinte oder des Substrats hinsichtlich Wärmeleitfähigkeit, Ausdehnung etc. Diese Einflussgrößen müssen ermittelt und dem Modell zur Verfügung gestellt werden. Damit lassen sich die zu erwartenden Abweichungen, inklusive einer bestimmten Fehlertoleranz, berechnen und entsprechende Gegenmaßnahmen zur Kompensation ableiten. Mit den so ermittelten Modifikationen kann dann der eigentliche Druckauftrag durchgeführt werden. Zusätzliche einzelne oder systematische Nachmessungen zur Kontrolle der Genauigkeit des Modells sind natürlich dennoch sinnvoll.

Das Verfahren und das Modell sind für die Eigenschaften und den Betrieb einer Inkjet-Druckmaschine, insbesondere einer Inkjet-Bahndruckmaschine, vorgesehen. Alternativ sind jedoch auch Anpassungen an Verfahren und Modell denkbar, welche die Adaption an eine Inkjet-Bogendruckmaschine oder gar eine Offsetdruckmaschine ermöglichen.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung ist dabei, dass die geometrischen Abweichungen sowohl in, als auch quer zur Druckrichtung berechnet und kompensiert werden.

Da die Dehnungen und Deformationen der Drucksubstrates in alle Richtungen wirken, müssen auch die geometrischen Abweichungen sowohl in Druckrichtung, als auch orthogonal zu dieser berechnet und kompensiert werden.

Eine weitere bevorzugte Weiterbildung ist dabei, dass die Druckmaschine als Druckverfahren den Rollendruck einsetzt und zur Vereinfachung des Berechnungsmodells die Temperatur der Bahnabschnitte an den Druckwerken gemessen und in die Berechnung der geometrischen Abweichung mit einbezogen wird.

Das Verfahren ist bevorzugt für Rollendruckmaschinen konzipiert. Falls es dabei möglich ist, an den einzelnen Druckwerken die Temperatur der Bahnabschnitte zu messen, vereinfacht sich mit dieser zusätzlichen Information, bzw. Einflussgröße die Berechnung des Modells für die geometrischen Abweichungen massiv.

Eine bevorzugte Weiterbildung des erfindungsgebenden Verfahrens ist dabei, dass geometrische Abweichungen, welche auf einem konstanten Störeinfluss basieren, durch eine statische, zeitunabhängige Kompensation korrigiert werden.

Sind die Einflussgrößen, welche die geometrischen Abweichungen verursachen konstant, wie z.B. eine konstante Druckgeschwindigkeit, so wird die Kompensation statisch durchgeführt. Statisch bedeutet dabei die Verzerrung ist zeitunabhängig und die Kompensation bleibt konstant für alle nachfolgenden Druckwerke und unabhängig von der verstrichenen Zeit.

Eine weitere bevorzugte Weiterbildung ist dabei, dass geometrische Abweichungen, welche auf dynamischen, zeitabhängigen Störeinflüssen basieren, durch ein zeitvariantes Modell erfasst werden und durch eine zeitabhängige Kompensation korrigiert werden. Sind die Einflussgrößen, welche die geometrischen Abweichungen verursachen dagegen zeitabhängig, wie z.B. der Wärmetransport, dann ist über ein zeitvariantes Modell die Verformung zum Zeitpunkt des Druckvorganges im nächsten und den darauffolgenden Druckwerken zu ermitteln und genau für diesen Zeitraum zu kompensieren.

Eine bevorzugte Weiterbildung des erfindungsgebenden Verfahrens ist dabei, dass die Kompensation der geometrischen Abweichungen durch eine modellbasierte Registersteuerung durchgeführt wird, bei welche die Position der Teilbilder zueinander ermittelt und modifiziert wird.

Neben den geometrischen Abweichungen innerhalb der Teilbilder bzw. der einzelnen Farbauszüge welche durch das Verfahren der modellbasierten Kompensation bereits korrigiert werden, verursachen die Dehnungen und Deformationen auch Abweichungen in den Positionen der Teilbilder untereinander bzw. des gesamten Sujets zum Rand des Drucksubstrates und im Verhältnis von dessen Vorder- zu Rückseite. Um diese Abweichungen ebenfalls zu kompensieren, wird das Modell zur Berechnung dieser Abweichungen angepasst. Damit wird eine entsprechende modellbasierte Registersteuerung ermöglicht.

Eine weitere bevorzugte Weiterbildung des Verfahrens ist dabei, dass das Verfahren in den Workflow zur Abarbeitung eines Druckprozesses integriert ist.

Da die Berechnung und Kompensation vor, bzw. auch während der Durchführung des Druckprozesses durchgeführt wird, wird es in den rechner- und softwaregestützten Steuerungsprozess des Druckprozesses integriert.

Eine bevorzugte Weiterbildung der erfindungsgemäßen Vorrichtung ist dabei, dass die Ermittlung der der Einflussgrößen des Modells sowie die Berechnung und Durchführung der Kompensation vom Steuerungsrechner der Druckmaschine automatisiert durchgeführt wird.

Im Rahmen des Workflows zur Abarbeitung des Druckauftrages ermittelt der Steuerungsrechner der Druckmaschine automatisch die Einflussgrößen des Modells. Die Grundkonfiguration ist dabei für den Anwender einsehbar und kann, je nach Ausführung, manuell justiert werden.

Eine bevorzugte Weiterbildung der erfindungsgemäßen Vorrichtung ist dabei, dass als Druckverfahren ein Inkjet-Druckverfahren mit UV-Trocknung oder ein Inkjet-Druckverfahren mit Elektronenstrahltrocknung eingesetzt wird. Für die Anwendung des offenbarten Verfahrens ist als bevorzugtes Druckverfahren ein Inkjet-Druckverfahren mit UV-Trocknung oder ein Inkjet-Druckverfahren mit Elektronenstrahltrocknung vorgesehen. Letzteres Trocknungsverfahren ist dabei dem mit UV-Trocknung sehr ähnlich. Dabei werden mittels einer ionisierenden Strahlung die Moleküle im Bindemittel einer Druckfarbe ionisiert und eine Radikalbildung verursacht, welche dann den Trocknungsprozess einleitet. Da diese Art der Trocknung relativ teuer ist, wird sie nur selten eingesetzt - z.B. bei Lebensmittelverpackungen wegen der keimabtötenden Wirkung. Ein weiteres bevorzugtes Druckverfahren für die Anwendung des offenbarten Verfahrens ist ein Inkjet-Druckverfahren mit Tinte auf Wasser- oder Lösemittelbasis.

Das erfindungsgemäße Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:

Fig. 1:  ein Beispiel einer Inkjet-Rollendruckmaschine
Fig. 2:  mögliche Drucksubstratdehnungen und -deformationen
Fig. 3:  den Ablauf des Verfahrens zur modellbasierten Kompensation lokaler Passerungenauigkeiten

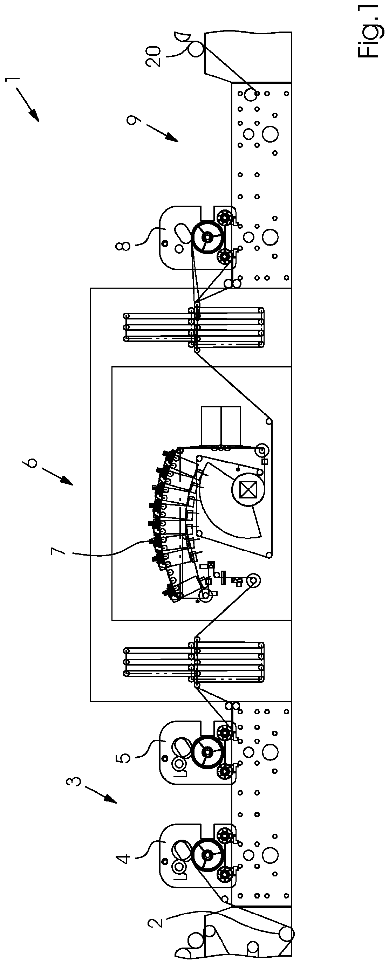

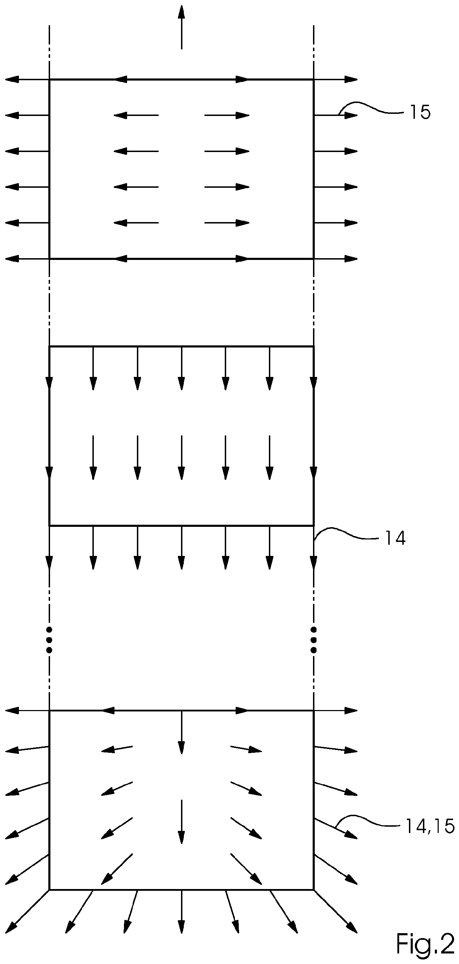

Anwendungsgebiet ist in der bevorzugten Ausführungsvariante eine Inkjet-Rollendruckmaschine 1. Ein Beispiel für den Aufbau einer solchen Maschine 1 ist in Figur 1 dargestellt. Sie teilt sich üblicherweise in die Druckvorbereitungsstufe 3, bestehend aus zwei Flexo-Werken für die Weiß/Vollfläche 4 sowie den Primer 5, in das eigentliche Inkjet-Druckwerk 6, was wiederum aus einzelnen Inkjet-Druckköpfen 7 besteht, sowie in die Weiterverarbeitungsstufe 9 mit einem weiteren Flexo-Werk für den Lack 8. Dazu kommen der Abwickler 2 und der Aufwickler 20 zum Zuführen und wieder Aufnehmen der der zu bedruckenden Papierbahn. Beim Betrieb dieser Druckmaschine kommt es, wie bereits einleitend beschrieben, zu geometrischen Abweichungen sowohl der einzelnen Farbauszüge selbst als auch in ihrer Position zueinander und bezogen ihre Position im Sujet. Diese Abweichungen liegen in Deformationen und Ausdehnungen der Farbauszüge begründet, welche sowohl durch gegenseitige Beeinflussungen des Drucksubstrates und der Tinte, als auch durch externe physikalische Einflussgrößen verursacht werden. Beispiele für diese Ausdehnungen sind in Figur 2 dargestellt. Sie können zum einen Verformungen längs zur Druckrichtung 14 ausmachen - wie im oberen Teil der Figur dargestellt. Aber auch Ausdehnungen quer zur Druckrichtung 15, wie im Mittelteil der Figur 2 ersichtlich sind möglich. In der Praxis treten üblicherweise beide Arten der Verformungen 14, 15 auf. Im Ergebnis überlagern sich diese - so wie schematisch im unteren Teil von Figur 2 dargestellt.

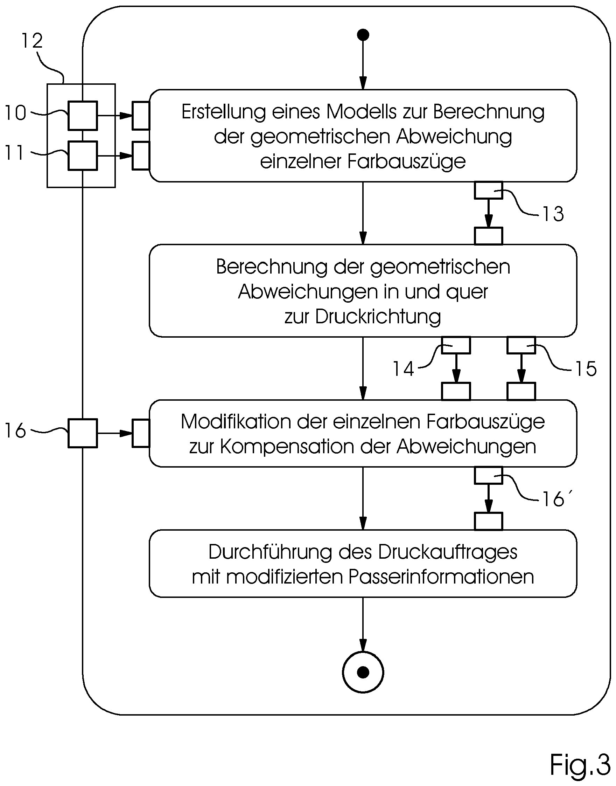

Der Ablauf des erfindungsgemäßen Verfahrens in seiner bevorzugten Ausführungsvariante ist in Figur 3 dargestellt. Zielgrößen der Vorhersage sind die örtlichen Abweichungen der einzelnen Farbauszüge zu einer Referenz in Druckrichtung 14 und quer zur Druckrichtung 15. In einem weiteren Schritt werden dann die Einzelfarbauszüge geometrisch so modifiziert werden, dass die Abweichungen kompensiert werden und der Übereinanderdruck ein korrektes Gesamtbild ergibt.

Zuerst muss dabei das Modell zur Bestimmung der geometrischen Abweichungen mathematisch aufgestellt werden. Es besteht aus mehreren Formeln mit denen die Abweichungen jeweils längs und quer zur Druckrichtung berechnet werden können. Die wesentlichen Parameter für die Formeln sind Einflussgrößen 12, welche die den geometrischen Abweichungen 14, 15 zugrundeliegenden Drucksubstratdehnungen und - deformationen verursachen. Sie können in folgende Kategorien eingeteilt werden:

**1. Prozessparameter 10**

- Bahnspannung in bzw. zwischen den Druckwerken
- Trocknerleistung der einzelnen Pinning Module zwischen den Druckwerken
- Druckfarbe Farbmenge (örtlich verteilt) = f (Flächendeckung und lokale Farbstärke entspr. Schichtdicke)
- Flächendeckung lokal
- Druckgeschwindigkeit

**2. Materialparameter 11**

- Eigenschaften der Farben / Tinten
  insb. physikalische Eigenschaften wie Intensität / Reaktivität bei UV, Menge an Photoinitiatoren, Wärmeleitungskoeffizienten, Art des Pigmentes etc.
- Substrateigenschaften (Bahn)
  Typ, Dicke, Bahnbreite, E Modul (Temperaturabhängigkeit), Oberflächeneigenschaften, Wärmeübertragung, Wärmeleitfähigkeit, Ausdehnungskoeffizient, Querkontraktionszahl, Anisotropie der Folie

Die abgeleiteten Formelzeichen lauten dementsprechend:

| | |
|---|---|
| TL | Trocknerleistung |
| FM | Farbmenge = $f(FD,FS)$      FD = Flächendeckung, FS = Farbschichtdicke |
| FI | Farbintensität |
| V | Druckgeschwindigkeit |

| | |
|---|---|
| Bahn BSp | Spannung |
| BD | Dicke |
| BE | E Modul (T) |
| BW | Wärmeausdehnungkoeffizient |

Mit diesen Parametern lassen sich Formeln zur Berechnung der geometrischen Abweichungen jeweils längs und quer zur Druckrichtung 14, 15 und damit das mathematische Modell aufstellen.

Die Berechnungsvorschriften der Transformation lauten:

$$\varepsilon_{Umfang} = \frac{\Delta L}{L}$$
$$= a_0 + a_1 * TL + a_2 * FM + a_3 * FI + a_4 * V + a_5 * BSp + a_6 * BD$$
$$+ a_7 * BE + a_8 * BW + a_9 * TL * TM * FI * V * BSp * BD * BE * BW$$
$$+ \cdots$$

$$\varepsilon_{Quer} = \frac{\Delta B}{B}$$
$$= b_0 + b_1 * TL + b_2 * FM + b_3 * FI + b_4 * V + b_5 * BSp + b_6 * BD$$
$$+ b_7 * BE + b_8 * BW + b_9 * TL * TM * FI * V * BSp * BD * BE * BW$$
$$+ \cdots$$

Der Ausdruck "..." gibt dabei jeweils Erweiterungsmöglichkeiten des Modells für optionale weitere Parameter an.

Die einzelnen Summanden der Formeln werden in Drucktests unter Variation der Einflussparameter mittels einer Regressionsanalyse bestimmt, ebenso welche und wie viele weitere gemischten Terme zu berücksichtigen sind. Die Größen TL, BSp, FS können den Einstellungen der Maschinensteuerung entnommen werden. Die Größen FM (FD) sowie materialspezische Parameter BD, BE, BW können aus den Daten eines Jobtickets bzw. weiteren zugehörigen Quellen entnommen werden.

Da die Farben beim Pinning nur zum Teil getrocknet werden, bleibt eine Restmenge unbenetzt und wird bei den weiteren Trocknungsvorgängen in den folgenden Werken weiter getrocknet. Dieser Vorgang muss berücksichtigt werden, d.h. es kommen weitere gemischte Terme hinzu.

Ist das Modell erstellt und die Einflussgrößen parametrisiert werden die entsprechenden geometrischen Abweichungen 14, 15 berechnet. Mit den berechneten Abweichungen lassen sich dann zur Kompensation die Farbauszüge entsprechend modifizieren. Bei der Kompensation kann statisch und dynamisch korrigiert werden. Statisch bedeutet dabei die Verzerrung ist zeitunabhängig und die Kompensation bleibt konstant für alle nachfolgenden Druckwerke und unabhängig von der verstrichenen Zeit.

Sind die Einflussgrößen 12, welche die geometrischen Abweichungen verursachen dagegen zeitabhängig, wie z.B. der Wärmetransport, dann ist über ein zeitvariantes Modell die Verformung zum Zeitpunkt des Druckvorganges im nächsten und den darauffolgenden Druckwerken 6 zu ermitteln und genau für diesen Zeitraum zu kompensieren.

Falls es möglich ist, an den einzelnen Druckwerken 6 der Druckmaschine 1 die Temperatur der Bahnabschnitte zu messen, vereinfacht sich mit dieser zusätzlichen Information, bzw. Einflussgröße 12 der Aufwand für die Berechnung des Modells für die geometrischen Abweichungen 14, 15 massiv. In einer solchen alternativen Ausführungsvariante reduzieren sich die Formeln für das Modell zur Berechnung der Abweichungen längs und quer zur Druckrichtung 14, 15 auf:

$$\varepsilon_{Umfang} = \frac{\Delta L}{L} = a_0 + a_1 * T_{12} * BW + a_2 * \Delta E_{12} * BSp$$

$$\varepsilon_{Quer} = \frac{\Delta B}{B} = b_0 + b_1 * T_{12} * BW + b_2 * \Delta E_{12} * BSp$$

mit $T$ = Temperatur, $\Delta T_{12} = T\,DW_2 - T\,DW_1$,
$\Delta E_{12n}$ = Differenz der E Moduli DW2 und DW1

In ähnlicher Weise wie beschrieben ist es auch möglich in einer weiteren alternativen Ausführungsvariante eine modellbasierte Registersteuerung in Längs- und Querrichtung der geometrisch korrekten Einzelbilder zueinander zu entwickeln. Dabei ist sowohl eine reine modellbasierte Registersteuerung denkbar, als auch eine Kombination mit einem Modell was die dehnungsbasierten Abweichungen im Register und die geometrischen Abweichungen der einzelnen Farbauszüge enthält.

In einer weiteren alternativen Ausführungsvariante kann das Verfahren neben dem Einsatz bei Rollenmaschinen mit einigen Anpassungen des mathematischen Modells auch auf Bogenmaschinen eingesetzt werden.

**Bezugzeichenliste**

1 Inkjet-Druckmaschine
2 Abwickler
3 Druckvorbereitungsstufe
4 Flexo-Werk für Weiß-/Vollfläche
5 Flexo-Werk für Primer
6 Inkjet-Druckwerk
7 Inkjet-Druckkopf
8 Flexo-Werk für Lack
9 Weiterverarbeitungsstufe
10 Prozessparameter
11 Materialparameter
12 Modelleinflussgrößen
13 Modell zur Berechnung geometrischer Abweichungen von Farbauszügen
14 Abweichung in Druckrichtung $\varepsilon_{umfang}$
15 Abweichung quer zur Druckrichtung $\varepsilon_{quer}$
16 Passerinformationen des Druckauftrages
16' modifizierte Passerinformationen des Druckauftrages
20 Aufwickler

**Patentansprüche**

**1.** Verfahren zur modellbasierten Kompensation lokaler Passerungenauigkeiten in einer Rollen-Inkjet-Druckmaschine, die folgenden Schritte umfassend:

• Erstellung eines mathematischen Modells zur Berechnung geometrischer Abweichungen (14, 15) von Farbauszügen
• Ermittlung der Einflussgrößen (12) des Modells, welche Prozess- (10) und Materialparameter (11) umfassen
• Berechnung der geometrischen Abweichungen (14, 15) der Farbauszüge unter Einsatz des erstellten Modells und der ermittelten Einflussgrößen (12) des Modells
• Modifikation der einzelnen Farbauszüge (16') zur Kompensation der berechneten geometrischen Abweichungen (14, 15)
• Durchführung eines Druckauftrages mit den durchgeführten Modifikationen (16')

2. Verfahren nach Anspruch 1
**dadurch gekennzeichnet,**
**dass** die geometrischen Abweichungen (14, 15) sowohl in, als auch quer zur Druckrichtung berechnet und kompensiert werden.

3. Verfahren nach einem der vorherigen Ansprüche,
**dadurch gekennzeichnet,**
**dass** die Druckmaschine (1) als Druckverfahren den Bahnendruck einsetzt und zur Vereinfachung des Berechnungsmodells die Temperatur der Bahnabschnitte an den Druckwerken (6) gemessen und in die Berechnung der geometrischen Abweichung (14, 15) mit einbezogen wird.

4. Verfahren nach einem der vorherigen Ansprüche,
**dadurch gekennzeichnet,**
**dass** geometrische Abweichungen, welche auf einem konstanten Störeinfluss basieren, durch eine statische, zeitunabhängige Kompensation korrigiert werden.

5. Verfahren nach einem der vorherigen Ansprüche,
**dadurch gekennzeichnet,**
**dass** geometrische Abweichungen, welche auf dynamischen, zeitabhängigen Störeinflüssen basieren, durch ein zeitvariantes Modell erfasst werden und durch eine zeitabhängige Kompensation korrigiert werden.

6. Verfahren nach einem der vorherigen Ansprüche,
**dadurch gekennzeichnet,**
**dass** die Kompensation der geometrischen Abweichungen durch eine modellbasierte Registersteuerung durchgeführt wird, bei welcher die Position der Teilbilder zueinander ermittelt und modifiziert wird.

7. Verfahren nach einem der vorherigen Ansprüche,
**dadurch gekennzeichnet,**
**dass** das Verfahren in den Workflow zur Abarbeitung eines Druckprozesses integriert ist.

8. Verfahren nach Anspruch 7,
**dadurch gekennzeichnet,**
**dass** die Ermittlung der Einflussgrößen (12) des Modells sowie die Berechnung und Durchführung der Kompensation vom Steuerungsrechner der Druckmaschine (1) automatisiert durchgeführt wird.

9. Verfahren nach einem der vorherigen Ansprüche,
**dadurch gekennzeichnet,**
**dass** als Druckverfahren ein Inkjet-Druckverfahren mit UV-Trocknung oder ein Inkjet-Druckverfahren mit Elektronenstrahltrocknung eingesetzt wird.

**Claims**

1. Method for a model-based compensation of local register inaccuracies in a web-fed inkjet printing machine comprising the steps of

• creating a mathematical model for calculating geometric deviations (14, 15) of colour separations

• determining the influencing values (12) of the model, which comprise process (10) and material parameters
• calculating the geometric deviations (14, 15) of the colour separations using the created model and the determined influencing values (12) of the model
• modifying the individual colour separations (16') to compensate for the calculated geometric deviations (14, 15)
• processing the print job using the applied modifications (16')

2. Method according to claim 1,
**characterized in**
**that** the geometric deviations (14, 15) are calculated and compensated for both in the printing direction and perpendicular to the printing direction.

3. Method according to any one of the preceding claims,
**characterized in**
**that** the printing process of the printing machine (1) is web-fed printing and to simplify the calculation model, the temperature of the web sections is measured at the printing units (6) and is factored in when calculating the geometric deviation (14, 15).

4. Method according to any one of the preceding claims,
**characterized in**
**that** geometric deviations that are based on a constant disturbing influence are corrected by a static, time-independent compensation.

5. Method according to any one of the preceding claims,
**characterized in**
**that** geometric deviations that are based on dynamic, time-dependent disturbing influences are determined by a time-variable model and are corrected by a time-dependent compensation.

6. Method according to any one of the preceding claims,
**characterized in**
**that** the compensation of the geometric deviations is implemented by a model-based register control operation in which the position of the image parts relative to one another is determined and modified.

7. Method according to any one of the preceding claims,
**characterized in**
**that** the method is integrated in the workflow for processing a print job.

8. Method according to claim 7,
**characterized in**
**that** the determination of the influencing values (12) of the model and the calculation and implementation of the compensation is carried out by the control unit of the printing machine (1) in an automated way.

9. Method according to any one of the preceding claims,
**characterized in**
**that** the printing process is an inkjet printing process including UV curing or an inkjet printing process including electron beam curing.

**Revendications**

1. Procédé pour la compensation basée sur le modèle d'imprécisions locales de repérage dans une machine d'impression à jet d'encre par rouleau, comprenant les étapes suivantes :

• réalisation d'un modèle mathématique pour le calcul de divergences géométriques (14, 15) de séparations de couleur
• détermination des grandeurs d'influence (12) du modèle qui comportent des paramètres de processus (10) et de matériau (11)
• calcul des divergences géométriques (14, 15) des séparations de couleur en utilisant le modèle réalisé et les variables (12) du modèle

• modification de chaque séparation de couleur (16') pour la compensation des divergences géométriques calculées (14, 15)
• exécution d'une tâche d'impression avec les modifications effectuées (16').

2. Procédé selon la revendication 1,
   **caractérisé en ce**
   **que** les divergences géométriques (14, 15) sont calculées et compensées aussi bien dans que transversalement à la direction d'impression.

3. Procédé selon l'une des revendications précédentes,
   **caractérisé en ce**
   **que** la machine d'impression (1) utilise, comme procédé d'impression, l'impression par bande et, pour simplifier le modèle de calcul, la température des sections de bande est mesurée sur les groupes d'impression (6) et est prise en compte pour le calcul de la divergence géométrique (14, 15).

4. Procédé selon l'une des revendications précédentes,
   **caractérisé en ce**
   **que** les divergences géométriques, qui sont basées sur une influence perturbatrice constante, sont corrigées par une compensation statique, indépendante du temps.

5. Procédé selon l'une des revendications précédentes,
   **caractérisé en ce**
   **que** des divergences géométriques, qui sont basées sur des influences perturbatrices dynamiques et dépendantes du temps, sont détectées par un modèle temporel et sont corrigées par une compensation dépendant du temps.

6. Procédé selon l'une des revendications précédentes,
   **caractérisé en ce**
   **que** la compensation des divergences géométriques est effectuée par une commande de repères en modifiant et en déterminant la position des images partielles entre elles.

7. Procédé selon l'une des revendications précédentes,
   **caractérisé en ce**
   **que** le procédé est intégré dans le flux de travail pour le traitement d'un processus d'impression.

8. Procédé selon la revendication 7,
   **caractérisé en ce**
   **que** la détermination des grandeurs d'influence (12) du modèle ainsi que le calcul et l'exécution de la compensation sont effectués automatiquement par l'ordinateur de commande de la machine d'impression (1).

9. Procédé selon l'une des revendications précédentes,
   **caractérisé en ce**
   **qu'**en tant que procédé d'impression, il est utilisé un procédé d'impression á jet d'encre avec un séchage UV ou un procédé d'impression à jet d'encre avec un séchage á faisceau d'électron.

Fig.1

Fig.2

12

10

11

13

Erstellung eines Modells zur Berechnung
der geometrischen Abweichung
einzelner Farbauszüge

Berechnung der geometrischen
Abweichungen in und quer
zur Druckrichtung

14    15

16

Modifikation der einzelnen Farbauszüge
zur Kompensation der Abweichungen

16´

Durchführung des Druckauftrages
mit modifizierten Passerinformationen

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 000010136747 A1
- DE 102012020238 A1
- US 20110134179 A1
- DE 10040368 A1
- DE 102009051197 A1
- US 20100129096 A1